# EUROPÄISCHE PATENTSCHRIFT

(11) **EP 4 537 005 B1**
(45) Veröffentlichungstag und Bekanntmachung des Hinweises auf die Patenterteilung: **11.02.2026**
(21) Anmeldenummer: 23727459.2
(22) Anmeldetag: 11.05.2023
(51) Int. Cl.: F17C 13/02, G01K 1/16

(54) **BRENNGASTANK SOWIE BRENNGASTANKSYSTEM**
FUEL GAS TANK AND FUEL GAS TANK SYSTEM
RÉSERVOIR DE GAZ COMBUSTIBLE ET SYSTÈME DE RÉSERVOIR DE GAZ COMBUSTIBLE

(30) Priorität: 10.06.2022 DE 102022205934
(43) Veröffentlichungstag der Anmeldung: 16.04.2025
(73) Patentinhaber: Robert Bosch GmbH, 70442 Stuttgart (DE)
(72) Erfinder: KATZ, Martin, 70469 Stuttgart (DE); WESSNER, Jochen, 73728 Esslingen (DE)
(86) Internationale Anmeldenummer: PCT/EP2023/062551
(87) Internationale Veröffentlichungsnummer: WO 2023/237283

(56) Entgegenhaltungen:
- DE-A1- 102014 003 587
- DE-A1- 102017 011 722
- US-A1- 2010 032 934
- US-A1- 2011 180 551

## Beschreibung

Die Erfindung betrifft einen Brenngastank zum Speichern von Brenngas, beispielsweise Wasserstoff oder Erdgas. Derartige Brenngastanks kommen insbesondere in Fahrzeugen zum Einsatz, die mit Brenngas betrieben werden, beispielsweise in einem Brennstoffzellenfahrzeug oder in einem Gasfahrzeug.

Darüber hinaus betrifft die Erfindung ein Brenngastanksystem mit mindestens einem erfindungsgemäßen Brenngastank.

### Stand der Technik

In Fahrzeugen, die mit einem Brenngas, wie beispielsweise Wasserstoff, betrieben werden, wird das Brenngas üblicherweise unter Druck in einem Brenngastank bevorratet. Bei Wasserstoff kann der Druck bis zu 70 MPa betragen. Die Temperatur im Brenngastank kann dabei bis auf 85°C ansteigen. Die Temperaturgrenze wird dabei in der Regel durch das Material des Brenngastanks vorgegebenen, wobei als Material häufig kohlenstofffaserverstärkter Kunststoff ("CFK") verwendet wird. Bei Verwendung eines CFK-Materials werden oberhalb von 85°C die zur Fixierung der Kohlenstofffasern notwendigen Kunststoffe, insbesondere Kunstharze, zu weich, so dass die erforderliche Festigkeit des Brenngastanks nicht mehr gewährleistet ist.

Da beispielsweise Wasserstoff im relevanten Temperaturbereich einen negativen Joule-Thomson Effekt aufweist, erwärmt er sich beim Betanken eines Brenngas- bzw. Wasserstofftanks. Um Schäden am Brenngastank zu vermeiden, wird daher Wasserstoff vor dem Tankvorgang auf etwa - 40°C abgekühlt. Ferner kann eine nach oben abgeknickte Tanklanze zum Befüllen des Brenngastanks verwendet werden, welche die Vermischung von frischem Wasserstoff mit dem Tankinhalt fördert und dadurch die Aufheizung verringert. Als weitere Maßnahme kann die Tanktemperatur gemessen bzw. überwacht werden, so dass bei Überschreiten der Temperaturgrenze der Tankvorgang abgebrochen werden kann. Damit die Temperaturgrenze sicher eingehalten wird, muss der Abbruch frühzeitig erfolgen. Hohe Messtoleranzen wirken sich daher negativ aus. Da üblicherweise die Ermittlung der im Brenngastank gespeicherten Masse ebenfalls basierend auf der Tanktemperatur durchgeführt wird, können hohe Messtoleranzen ferner zu einem fehlerhaft berechneten Tankstand bzw. einer fehlerhaft berechneten Restreichweite führen.

Für beide Zwecke ist es daher wünschenswert, eine möglichst genaue Information über die Temperatur in einem Brenngastank zu erhalten. Allerdings ist für die Einhaltung der Temperaturgrenze die lokal auftretende maximale Temperatur entscheidend, während für die Berechnung der gespeicherten Masse die mittlere Temperatur besser geeignet ist. Diese beiden Wünsche zu vereinbaren, gestaltet sich schwierig. Dies gilt im Besonderen, da üblicherweise Thermoelemente, Thermistoren oder Temperaturwiderstände zur Temperaturmessung eingesetzt werden, welche die Temperatur lediglich in ihrer unmittelbaren Umgebung erfassen können. Aufgrund der begrenzten Zugänglichkeit des Tankinnenraums ist zudem die Auswahl der Sensorposition stark eingeschränkt.

Aus der US 2010/ 0032934 A1 geht beispielhaft ein Brenngastank mit einer Tankleitung und einem Tankventil zum Befüllen des Brenngastanks mit Brenngas sowie einem an der Tankleitung angeordneten Sensor zum Erfassen einer Zustandsgröße des Brenngases hervor. Der Sensor ist in der Weise positioniert, dass er beim Befüllen des Brenngastanks mit Brenngas außerhalb des sich bildenden Druckstrahls liegt. Auf diese Weise soll die Messgenauigkeit des Sensors erhöht werden.

Die vorliegende Erfindung ist mit der Aufgabe befasst, einen Brenngastank mit einem Temperatursensor zur Erfassung der Temperatur im Brenngastank anzugeben, der eine hohe Messgenauigkeit aufweist und einfach zu montieren ist.

Zur Lösung der Aufgabe wird der Brenngastank mit den Merkmalen des Anspruchs 1 vorgeschlagen. Vorteilhafte Weiterbildungen der Erfindung sind den Unteransprüchen zu entnehmen. Des Weiteren wird ein Brenngastanksystem mit mindestens einem erfindungsgemäßen Brenngastank vorgeschlagen.

### Offenbarung der Erfindung

Vorgeschlagen wird ein Brenngastank für ein Brenngastanksystem, aufweisend ein von einer Wandung umschlossenes Speichervolumen, das über eine Tankleitung mit integriertem Tankventil mit Brenngas befüllbar ist, sowie einen Temperatursensor zum Erfassen der Temperatur im Brenngastank. Der Temperatursensor ist dabei außerhalb des Speichervolumens angeordnet und über einen in das Speichervolumen hineinragenden thermischen Leiter thermisch an das Speichervolumen angebunden.

Der thermische Leiter leitet Temperaturinformationen aus dem Inneren des Brenngastanks nach außen an den Temperatursensor weiter, so dass mit Hilfe des Temperatursensors die Temperatur des Brenngases im Brenngastank erfassbar ist, gleichwohl der Sensor außerhalb des Speichervolumens angeordnet ist. Zugleich wird durch die Anordnung des Temperatursensors außerhalb des Speichervolumens dessen Montage und ggf. Demontage bei einem Defekt vereinfacht, da der Temperatursensor leichter zugänglich ist. In gleicher Weise vereinfacht sich der notwendige elektrische Anschluss des Temperatursensors.

Da der Temperatursensor in der vorgeschlagenen Anordnung nicht in Kontakt mit dem Brenngas gelangt, ist dieser optimal geschützt. Ferner kann eine gasdichte Ausführung des Temperatursensors entfallen. Es kann somit ein einfacher und kostengünstiger Temperatursensor verbaut werden.

Bevorzugt weist der in das Speichervolumen hineinragende Abschnitt des thermischen Leiters eine axiale Länge L auf, die parallel zu einer Längsachse A des Brenngastanks gemessen wird. Über die Länge L kann eine Mittelwertbildung des Messwerts erreicht werden, die einer mittleren Temperatur im Brenngastank entspricht oder ihr zumindest ehr nahekommt.

Ferner bevorzugt ist der thermische Leiter parallel zur Längsachse A ausgerichtet. Das heißt, dass der thermische Leiter in axialer Richtung in das Speichervolumen hineinragt, so dass die Temperatur bis in die Tiefe des Speichervolumens erfassbar ist. Der thermische Leiter kann beispielsweise ein Stab sein, der aus einem besonders wärmeleitfähigen Material gefertigt ist.

In Weiterbildung der Erfindung wird vorgeschlagen, dass die Tankleitung in einem Rohr endet, das in das Speichervolumen hineinragt und eine Austrittsöffnung für das Brenngas ausbildet. Über das Rohr kann das Brenngas mehr mittig eingeleitet werden, so dass eine bessere Durchmischung erzielt wird. Das Rohr ist hierzu bevorzugt nach Art einer Tanklanze ausgebildet. Über die Austrittsöffnung des Rohrs kann zudem ein definierter Brenngasstrahl geformt werden. Das Rohr kann insbesondere parallel zum thermischen Leiter verlaufen. Ferner kann das Rohr im Wesentlichen gleich lang wie der thermische Leiter ausgebildet sein, so dass der thermische Leiter in etwa bis an den Brenngasstrahl heranreicht. Auf diese Weise werden über den thermischen Leiter auch Temperaturinformationen an den Temperatursensor weitergeleitet, welche beim Befüllen des Brenngastanks mit Brenngas lokal auftretende, maximale Temperaturen erfassbar machen.

Vorteilhafterweise bilden die Tankleitung, das Tankventil, der Temperatursensor und der thermische Leiter eine Tankeinheit aus, die in eine, vorzugsweise mittig angeordnete, stirnseitige Öffnung der Wandung des Brenngastanks eingesetzt ist. Die Tankeinheit vereinfacht die Montage, da die Tankleitung, das Tankventil, der Temperatursensor und der thermische Leiter als vormontierte Baueinheit in die Öffnung der Wandung eingesetzt werden können. Sofern die Tankleitung zumindest abschnittweise durch ein Rohr gebildet ist, kann auch dieses Teil der vormontierten Baueinheit sein.

Die Tankeinheit ist vorzugsweise derart in die Öffnung der Wandung eingesetzt, dass die Öffnung gasdicht geschlossen ist. Alternativ oder ergänzend kann zwischen der Tankeinheit und der Wandung des Brenngastanks mindestens ein Dichtelement, beispielsweise ein Dichtring, eingelegt sein.

Bevorzugt nimmt die Tankeinheit mindestens eine weitere Komponente auf, beispielsweise ein weiteres Ventil zur Entnahme von Brenngas aus dem Brenngastank. Bei dem weiteren Ventil kann es sich insbesondere um ein elektromagnetisch ansteuerbares Ventil handeln, das als stromlos geschlossenes Ventil ausgeführt ist, um im Fehlerfall ein Entweichen von Brenngas aus dem Brenngastank zu verhindern.

Ferner bevorzugt weist die Tankeinheit einen außenseitig über die Wandung vorstehenden Abschnitt auf, in den der Temperatursensor integriert ist. Der Temperatursensor kommt somit nicht nur außerhalb des Speichervolumens, sondern auch außerhalb der Wandung zu liegen, so dass die Zugänglichkeit des Sensors weiter optimiert ist. Ferner wird der notwendige elektrische Anschluss des Temperatursensors vereinfacht.

Des Weiteren bevorzugt weist die Tankeinheit einen Abschnitt mit einem Außengewinde auf, über das die Tankeinheit in die Öffnung der Wandung eingeschraubt ist. Auf diese Weise wird ein Formschluss zwischen der Tankeinheit und der Wandung des Brenngastanks erreicht, der die Lage des Tankventils sichert. Die Öffnung in der Wandung weist hierzu bevorzugt ein zum Außengewinde der Tankeinheit korrespondierendes Innengewinde auf.

Ferner wird vorgeschlagen, dass die Wandung des Brenngastanks im Querschnitt kreisförmig ist. Der kreisförmige Querschnitt erhöht die Belastbarkeit des Brenngastanks, so dass hohe Speicherdrücke möglich sind. Die Kreisform fördert zudem eine gleichmäßige Druck- und Temperaturverteilung im Brenngastank.

Alternativ oder ergänzend wird vorgeschlagen, dass die Wandung des Brenngastanks in mindestens einem Endabschnitt sphärisch geformt ist. Durch die sphärische Form des mindestens einen Endabschnitts wird die Druckfestigkeit des Brenngastanks weiter erhöht.

Darüber hinaus wird ein Brenngastanksystem vorgeschlagen, das mindestens einen erfindungsgemäßen Brenngastank umfasst. Beispielsweise können mehrere gleichartige Brenngastanks in paralleler Anordnung über einen gemeinsamen Rahmen gehalten sein. Der Rahmen erleichtert den Einbau des Brenngastanksystems in ein Fahrzeug, beispielsweise in ein Brennstoffzellenfahrzeug.

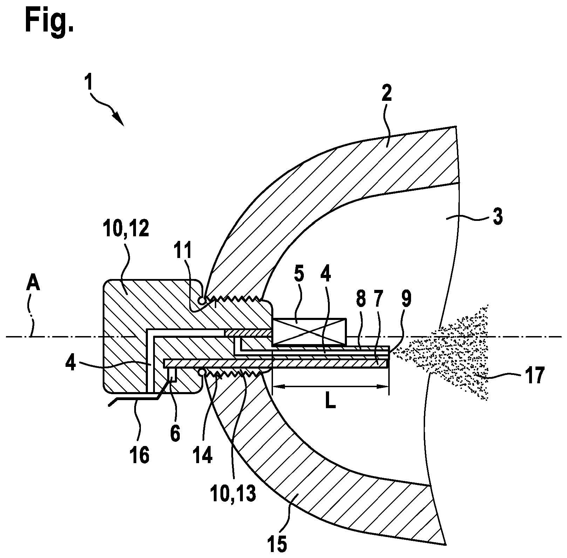

Eine bevorzugte Ausführungsform der Erfindung wird nachfolgend anhand der beigefügten Zeichnung näher erläutert. Diese zeigt einen schematischen Längsschnitt durch einen erfindungsgemäßen Brenngastank im Bereich einer Tankeinheit mit integriertem Temperatursensor.

### Ausführliche Beschreibung der Zeichnung

Der dargestellte Brenngastank 1 weist eine Wandung 2 mit kreisrundem Querschnitt auf, die ein Speichervolumen 3 für ein Brenngas umschließt. Der dargestellte Endabschnitt 15 der Wandung 2 ist sphärisch geformt und weist eine zentrale Öffnung 11 auf, in die eine Tankeinheit 10 eingesetzt bzw. eingeschraubt ist. Die Tankeinheit 10 weist eine Tankleitung 4 auf, in die ein Tankventil 5 integriert ist, das ein Befüllen des Brenngastanks 1 mit Brenngas über die Tankleitung 4 ermöglicht und zugleich ein Entweichen von Brenngas aus dem Brenngastank 1 verhindert. Die Tankleitung 4 führt über ein in das Speichervolumen 3 hineinragendes Rohr 8, das an seinem Ende eine Austrittsöffnung 9 für das Brenngas ausbildet. Über die Austrittsöffnung 9 ist ein definierter Brenngasstrahl 17 formbar.

Die in die Öffnung 11 eingesetzte Tankeinheit 10 weist zudem einen Temperatursensor 6 auf, der in einem Abschnitt 12 der Tankeinheit 10 integriert ist, der außenseitig über die Wandung 2 des Brenngastanks 1 vorsteht, so dass der Temperatursensor 6 leicht zugänglich ist. Ferner kann in einfacher Weise der notwendige elektrische Anschluss über einen Anschlussdraht 16 bewirkt werden.

Der in den Abschnitt 12 der Tankeinheit 10 integrierte Temperatursensor 6 ist somit außerhalb des Speichervolumens 3 des Brenngastanks 1 angeordnet und damit optimal vor dem Brenngas geschützt. Um die Temperatur im Brenngastank 1 zu erfassen, ist der Temperatursensor 6 über einen thermischen Leiter 7, der über eine Länge L in das Speichervolumen 3 des Brenngastanks 1 hineinragt, an das Speichervolumen 3 thermisch angebunden. Die axiale Länge L wird parallel zu einer Längsachse A des Brenngastanks 1 gemessen.

Die Länge L des thermischen Leiters 7 ist derart gewählt, dass aus unterschiedlichen Temperaturinformationen ein Mittelwert gebildet und an den Temperatursensor 6 weitergeleitet wird. Der thermische Leiter 7 ist hierzu aus einem besonders wärmeleitfähigen Material gefertigt. Die an den Temperatursensor 6 weitergeleitete Temperaturinformation entspricht der mittleren Temperatur im Brenngastank 1 oder kommt ihr zumindest sehr nahe.

Wie beispielhaft in der Figur dargestellt, kann die Tankeinheit 10 einen Abschnitt 13 mit einem Außengewinde 14 aufweisen, über welches die Tankeinheit 10 in die Öffnung 11 der Wandung 2 eingeschraubt ist. Auf diese Weise wird ein Formschluss zwischen der Tankeinheit 10 und der Wandung 2 erzielt, die der Lagesicherung der Tankeinheit 10 dient.

## Patentansprüche

1. Brenngastank (1) für ein Brenngastanksystem, aufweisend ein von einer Wandung (2) umschlossenes Speichervolumen (3), das über eine Tankleitung (4) mit integriertem Tankventil (5) mit Brenngas befüllbar ist, sowie einen Temperatursensor (6) zum Erfassen der Temperatur im Brenngastank (1), wobei der Temperatursensor (6) außerhalb des Speichervolumens (3) angeordnet und über einen in das Speichervolumen (3) hineinragenden thermischen Leiter (7) thermisch an das Speichervolumen (3) angebunden ist.

2. Brenngastank (1) nach Anspruch 1,
**dadurch gekennzeichnet, dass** der in das Speichervolumen (3) hineinragende Abschnitt des thermischen Leiters (7) eine axiale Länge (L) aufweist, die parallel zu einer Längsachse (A) des Brenngastanks (1) gemessen wird, wobei vorzugsweise der thermische Leiter (7) parallel zur Längsachse (A) ausgerichtet ist.

3. Brenngastank (1) nach Anspruch 1 oder 2,
**dadurch gekennzeichnet, dass** die Tankleitung (4) in einem Rohr (8) endet, das in das Speichervolumen (3) hineinragt und eine Austrittsöffnung (9) für das Brenngas ausbildet, wobei vorzugsweise das Rohr (8) parallel zum thermischen Leiter (7) verläuft.

4. Brenngastank (1) nach einem der vorhergehenden Ansprüche,
**dadurch gekennzeichnet, dass** die Tankleitung (4), das Tankventil (5), der Temperatursensor (6) und der thermische Leiter (7) eine Tankeinheit (10) ausbilden, die in eine, vorzugsweise mittig angeordnete, stirnseitige Öffnung (11) der Wandung (2) eingesetzt ist.

5. Brenngastank (1) nach Anspruch 4,
**dadurch gekennzeichnet, dass** die Tankeinheit (10) einen außenseitig über die Wandung (2) vorstehenden Abschnitt (12) aufweist, in den der Temperatursensor (6) integriert ist.

6. Brenngastank (1) nach Anspruch 4 oder 5,
**dadurch gekennzeichnet, dass** die Tankeinheit (10) einen Abschnitt (13) mit einem Außengewinde (14) aufweist, über das die Tankeinheit (10) in die Öffnung (11) der Wandung (2) eingeschraubt ist.

7. Brenngastank (1) nach einem der vorhergehenden Ansprüche,
**dadurch gekennzeichnet, dass** die Wandung (2) im Querschnitt kreisförmig und/oder in mindestens einem Endabschnitt (15) sphärisch geformt ist.

8. Brenngastanksystem, umfassend mindestens einen Brenngastank (1) nach einem der vorhergehenden Ansprüche.

## Claims

1. Fuel gas tank (1) for a fuel gas tank system, comprising a storage volume (3) which is enclosed by a wall (2) and can be filled with fuel gas via a tank line (4) with integrated tank valve (5), and a temperature sensor (6) for detecting the temperature in the fuel gas tank (1), wherein the temperature sensor (6) is arranged outside the storage volume (3) and is thermally attached to the storage volume (3) via a thermal conductor (7) protruding into the storage volume (3).

2. Fuel gas tank (1) according to Claim 1,
**characterized in that** the portion of the thermal conductor (7) projecting into the storage volume (3) has an axial length (L) which is measured parallel to a longitudinal axis (A) of the fuel gas tank (1), wherein the thermal conductor (7) is preferably oriented parallel to the longitudinal axis (A).

3. Fuel gas tank (1) according to Claim 1 or 2,
**characterized in that** the tank line (4) ends in a pipe (8), which protrudes into the storage volume (3) and forms an outlet opening (9) for the fuel gas, wherein the pipe (8) preferably runs parallel to the thermal conductor (7).

4. Fuel gas tank (1) according to one of the preceding claims,
**characterized in that** the tank line (4), the tank valve (5), the temperature sensor (6) and the thermal conductor (7) form a tank unit (10) which is inserted into a, preferably centrally arranged, front-side opening (11) of the wall (2).

5. Fuel gas tank (1) according to Claim 4,
**characterized in that** the tank unit (10) has a portion (12) which projects on the outside beyond the wall (2) and into which the temperature sensor (6) is integrated.

6. Fuel gas tank (1) according to Claim 4 or 5,
**characterized in that** the tank unit (10) has a portion (13) with an external thread (14), via which the tank unit (10) is screwed into the opening (11) of the wall (2).

7. Fuel gas tank (1) according to one of the preceding claims,
**characterized in that** the wall (2) is of circular shape in cross section and/or is of spherical shape in at least one end portion (15).

8. Fuel gas tank system, comprising at least one fuel gas tank (1) according to one of the preceding claims.

## Revendications

1. Réservoir de gaz combustible (1) pour un système de réservoir de gaz combustible, présentant un volume de stockage (3) entouré d'une paroi (2), qui peut être rempli de gaz combustible par l'intermédiaire d'une conduite de réservoir (4) avec soupape de réservoir intégrée (5), ainsi qu'un capteur de température (6) pour détecter la température dans le réservoir de gaz combustible (1), le capteur de température (6) étant agencé à l'extérieur du volume de stockage (3) et relié thermiquement au volume de stockage (3) par l'intermédiaire d'un conducteur thermique (7) pénétrant dans le volume de stockage (3).

2. Réservoir de gaz combustible (1) selon la revendication 1,
**caractérisé en ce que** la section du conducteur thermique (7) qui pénètre dans le volume de stockage (3) présente une longueur axiale (L) qui est mesurée parallèlement à un axe longitudinal (A) du réservoir de gaz combustible (1), le conducteur thermique (7) étant de préférence orienté parallèlement à l'axe longitudinal (A).

3. Réservoir de gaz combustible (1) selon la revendication 1 ou 2,
**caractérisé en ce que** la conduite de réservoir (4) se termine dans un tube (8) qui pénètre dans le volume de stockage (3) et réalise une ouverture de sortie (9) pour le gaz combustible, le tube (8) s'étendant de préférence parallèlement au conducteur thermique (7).

4. Réservoir de gaz combustible (1) selon l'une quelconque des revendications précédentes,
**caractérisé en ce que** la conduite de réservoir (4), la soupape de réservoir (5), le capteur de température (6) et le conducteur thermique (7) réalisent une unité de réservoir (10) qui est insérée dans une ouverture frontale (11) de la paroi (2), de préférence agencée au centre.

5. Réservoir de gaz combustible (1) selon la revendication 4,
**caractérisé en ce que** l'unité de réservoir (10) présente une section (12) dépassant de la paroi (2) du côté extérieur, dans laquelle est intégré le capteur de température (6).

6. Réservoir de gaz combustible (1) selon la revendication 4 ou 5,
**caractérisé en ce que** l'unité de réservoir (10) présente une section (13) avec un filetage extérieur (14) par l'intermédiaire duquel l'unité de réservoir (10) est vissée dans l'ouverture (11) de la paroi (2).

7. Réservoir de gaz combustible (1) selon l'une quelconque des revendications précédentes,
**caractérisé en ce que** la paroi (2) présente une forme circulaire dans la section transversale et/ou une forme sphérique dans au moins une section d'extrémité (15).

8. Système de réservoir de gaz combustible, comprenant au moins un réservoir de gaz combustible (1) selon l'une quelconque des revendications précédentes.
